Europäisches Patentamt

European Patent Office

Office européen des brevets

(11) Veröffentlichungsnummer : **0 043 601**
**B1**

(12) **EUROPÄISCHE PATENTSCHRIFT**

(45) Veröffentlichungstag der Patentschrift :
28.12.83

(51) Int. Cl.³ : **C 01 G 25/04**

(21) Anmeldenummer : 81200611.2

(22) Anmeldetag : 04.06.81

(54) **Verfahren zur Herstellung von Zirkoniumtetrafluorid.**

(30) Priorität : 05.07.80 DE 3025607

(43) Veröffentlichungstag der Anmeldung :
13.01.82 Patentblatt 82/02

(45) Bekanntmachung des Hinweises auf die Patenterteilung : 28.12.83 Patentblatt 83/52

(84) Benannte Vertragsstaaten :
AT BE CH DE FR GB IT LI LU NL SE

(56) Entgegenhaltungen :
BE-A- 557 949
DE-A- 1 936 314
CHEMICAL ABSTRACTS, Band 80, Heft 18, 16. Mai
1974, Seite 127, Nr. 98038t Columbus, Ohio, U.S.A.
CHEMICAL ABSTRACTS, Band 77, Heft 8, 21. August
1972, Seite 155, Nr. 50886d Columbus, Ohio, U.S.A.

(73) Patentinhaber : **METALLGESELLSCHAFT AG**
**Reuterweg 14 Postfach 3724**
**D-6000 Frankfurt/M.1 (DE)**

(72) Erfinder : **Fennemann, Wolfgang**
**Vibeler Strasse 29**
**D-6367 Karben 6 (DE)**

(74) Vertreter : **Fischer, Ernst, Dr.**
**Reuterweg 14**
**D-6000 Frankfurt am Main 1 (DE)**

## Verfahren zur Herstellung von Zirkoniumtetrafluorid

Die Erfindung betrifft ein Verfahren zur Herstellung von wasserfreiem Zirkoniumtetrafluorid durch Trocknen von in wässriger Flußsäure gelöstem Zirkoniumfluorid und anschließendes Kalzinieren des kristallwasserhaltigen Zirkoniumfluorids.

Zur Herstellung von wasserfreiem Zirkoniumtetrafluorid ist aus der US-PS 26 35 037 ein Verfahren bekanntgeworden, wobei ausgehend von $ZrOCl_2 \cdot 8H_2O$ über eine Fällungskristallisation in Flußsäure kristallwasserhaltiges Zirkoniumfluorid hergestellt, getrocknet und bei 500 bis 575 °C zu wasserfreiem $ZrF_4$ kalziniert wird. Dieses Verfahren weist verschiedene Nachteile auf. In allen Fällen, in denen das Ausgangsmaterial nicht in Form von $ZrOCl_2 \cdot 8H_2O$ vorliegt, muß zunächst dieses Zwischenprodukt hergestellt werden, was mit zusätzlichen Kosten und Umweltproblemen verbunden ist. Nach dem Abtrennen des Zirkoniumfluorids liegt eine Lösung vor, die die gesamte Menge der eingebrachten Chlorionen neben nicht ausgefälltem Zirkonium und überschüssig eingesetztem Fluor enthält. Diese Lösung ist nur sehr schwer aufzuarbeiten, wobei Zr- und F-Verluste nicht zu vermeiden sind. Außerdem wird eine Rückgewinnung von Flußsäure dadurch erschwert, daß zunächst eine Trennung von der Salzsäure vorgenommen werden muß. Schließlich ist die vorgesehene Kalzinierung bei vergleichsweise hohen Temperaturen mit einem unnötig hohen Energieaufwand verbunden.

Ferner ist aus der US-PS 26 39 218 ein dreistufiges Verfahren zur Herstellung von wasserfreiem Zirkoniumtetrafluorid bekanntgeworden, wonach $ZrO_2$ oder $ZrOCl_2 \cdot 8H_2O$ in einer wässrigen Flußsäurelösung gelöst, das Reaktionsprodukt getrocknet und danach kalziniert wird. Soweit hierbei das gleiche Ausgangsmaterial verwendet wird, wie bei der bereits gewürdigten US-PS, treten auch die gleichen Nachteile auf. Sofern von $ZrO_2$ oder in metallischer Form vorliegende Zirkoniumabfälle ausgegangen wird, muß das gelöste Zirkoniumfluorid über eine Trocknungskristallisation gewonnen werden. Dabei hat sich als nachteilig herausgestellt, daß das Zirkoniumfluorid sehr grobstückig anfällt und außerdem sehr fest an den Wänden der Trocknungseinrichtungen haftet. Das Ablösen von den Wänden und das für eine wirtschaftliche Durchführung der Kalzinierung erforderliche Zerkleinern, ist mit einem unvertretbar hohen Aufwand verbunden, nicht zuletzt auch deswegen, weil das Zirkoniumfluorid bekanntlich ein Material mit sehr großer Härte ist.

Aus der DE-OS 19 36 314 schließlich ist ein Verfahren zur Überführung von Halogensalz-Hydraten in die wasserfreie Form sowie eine Einrichtung zur Durchführung dieses Verfahrens bekanntgeworden, bei dem das feuchte Hydrat in einer ersten Stufe vorkalziniert und danach in mehreren Stufen weiter bis auf die zur Endkalzinierung erforderliche Temperatur von 560 °C erwärmt wird. Auch dieses Verfahren erfordert einen sehr hohen Aufwand an Apparaten und Energie und hat sich deshalb in der Praxis nicht durchsetzen können.

Es stellt sich somit die Aufgabe, ein Verfahren der eingangs genannten Art vorzuschlagen, das die Nachteile der bekannten Verfahren nicht aufweist, d. h. das insbesondere mit wesentlich wirtschaftlicher, einfacher und mit geringerem Energieaufwand durchführbar ist.

Erfindungsgemäß wird vorgeschlagen, daß die Lösung kontinuierlich in einen Wirbelschichtofen mit einem Bett aus granuliertem Zirkoniumfluorid eingesprüht und verdampft wird und daß das anfallende kristallwasserhaltige Zirkoniumfluorid ebenfalls in einen Wirbelschichtofen mit einem Bett aus granuliertem Zirkoniumfluorid bei 220 bis 300 °C kalziniert und das Granulat kontinuierlich aus dem Wirbelschichtofen abgezogen wird.

In weiterer Ausbildung des Erfindungsgedankens ist vorgesehen, daß das Verdampfen der Lösung und das Kalzinieren des anfallenden kristallwasserhaltigen Zirkoniumfluorids einstufig in demselben Wirbelschichtofen durchgeführt wird. Das einstufige Verfahren wird ebenfalls bei 220 bis 300 °C durchgeführt, vorzugsweise bei 240 bis 280 °C.

Ferner ist vorgesehen, daß im Wirbelschichtofen eine Heißgasgeschwindigkeit von 1 bis 4 m/s bezogen auf den leeren Ofenquerschnitt und eine Wirbelbetthöhe im nichtwirbelnden Zustand von 0,2 bis 0,8 m eingestellt wird. Weitere Einzelheiten und vorteilhafte Verfahrensmaßnahmen ergeben sich aus den Unteransprüchen 6 bis 14, sowie dem folgenden Ausführungsbeispiel in Verbindung mit dem beigefügten Verfahrensschema.

Durch Auflösen von Zirkoniummetallschrott (Zircalloy-IV-Rohrabschnitte) in Flußsäure, wurde nach Abfiltrieren des unlöslichen Metallschwamms eine klare Lösung folgender Zusammensetzung erhalten :

310 g/l Zr        $\triangleq$ 568 g/l $ZrF_4$
420 g/l Gesamt-F        $\triangleq$ 170 g/l freie HF
Dichte $_{RT}$ = 1,56 kg/l        $\triangleq$ 822 g/l $H_2O$.

Demnach wurden mehr als 99,9 % des Zr-Inhaltes des Einsatzmaterials in die Lösung überführt.

Die Granulieranlage bestand aus einem zylindrischen Wirbelschichtofen mit 0,5 m Durchmesser ($\triangleq$ 0,2 m² Rostfläche), dessen Abgas mit einem Zyklon entstaubt wurde. Der Zyklonstaub wurde über mit ausreichend Gefälle verlegte Leitung oberhalb des Wirbelbettes in den Wirbelschichtofen zurückgeführt.

In einer Brennkammer wurden ca. 25 Nm³/h Erdgas ($H_u$ = 34.000 KJ/Nm³) mit ca. 400 Nm³/h Luft (Primärluft) verbrannt und das dabei entstehende Rauchgas durch Beimischen weiterer ca. 560 Nm³/h

**0 043 601**

Luft (Sekundärluft) auf eine Temperatur von ca. 600 °C eingestellt. Mit diesem heißen Rauchgas wurde der Wirbelschichtofen angeströmt.

Das Wirbelbett bestand aus ca. 100 l Zr-Fluorid-Granulat, dessen Menge durch kontinuierliches Ablassen von ca. 90 kg/h konstant gehalten wurde.

Bei einer Schüttdichte von z. B. 1,8 kg/l betrug demnach die Ofen-Füllung ca. 180 kg und die mittlere Verweilzeit

$$\frac{180 \text{ kg Ofenfüllung}}{90 \text{ kg stündliche Entnahme}} = \text{ca. 2 h}$$

Die obenerwähnte Zr-Fluorid-Lösung wurde kontinuierliche unter Konstanthaltung des Niveaus im Venturi-Sumpf in den Venturi-Kreislauf eingespeist (ca. 160 l/h), wo diese durch $H_2O$-Verdampfen (Ausnutzen des Wärmeinhaltes der Ofenabgase zum Voreindampfen) und Auflösen von Zr-Fluorid-Staub und HF aufkonzentriert wurde auf im Mittel

ca. 800 g/l $ZrF_4$
ca. 250 g/l freie HF
ca. 1,75 kg/l Dichte

Von der im Venturikreislauf umgepumpten aufkonzentrierten Lösung (Temperatur ca. 110 °C), wurde ein Teilstrom abgezweigt und in die Wirbelschicht eingeleitet. Die Menge wurde dabei so bemessen, daß sich in der Wirbelschicht eine konstante Temperatur von 250 °C einstellte. Sie betrug ca. 125 l/h. Es wurde demnach die fühlbare Wärme des mit 600 °C anströmenden Rauchgases aus der Brennkammer durch Abkühlen auf 250 °C zum Verdampfen von Wasser ausgenutzt.

Aus der Differenz der Zr-Fluorid-Gehalte von in den Venturi eingespeister Lösung (160 l/h mit 568 g/l $ZrF_4$ = 91 kg/h $ZrF_4$) und in den Ofen abgegebener Lösung (125 l/h mit 800 g/l $ZrF_4$ = 100 kg/h $ZrF_4$) ergibt sich ein ca. 90 %-iger Granuliergrad des in das Wirbelbett eingespeisten Zr-Fluorides. Durch die Rückführung des nicht granulierten $ZrF_4$ über den Venturikreislauf wird praktisch 100 %-ige Granulatausbeute erzielt.

Das aus dem Wirbelofen austretende Gas kühlte auf dem Weg durch den Zyklon zum Venturi durch Abstrahlungsverluste auf ca. 230 °C ab. Bei direktem Wärmeaustausch im Venturi mit dessen Kreislauflösung, ergab sich weitere Temperaturabsenkung auf ca. 110 °C.

Das im Venturi auf ca. 110 °C abgekühlte Gas wurde anschließend in einem Absorber mit Wasser gewaschen, wobei die Abgastemperatur auf ca. 75 °C gesenkt und eine verdünnte Flußsäure (ca. 20 % HF) erzeugt wurde. Die Flußsäure, deren Konzentration in an sich bekannter Weise durch entsprechende Maßnahmen bei der Absorption variiert werden kann, ist für die Herstellung weiterer Zr-Fluorid-Lösung, geeignet.

Es wurden vergleichbare Versuche bei 200 °C und 300 °C gefahren und die dabei erhaltenen Zr-Fluorid-Granulate analysiert:

| Granuliertemperatur | Granulatzusammensetzung | | |
|---|---|---|---|
| °C | $ZrF_4$ Gew.% | $ZrO_2$ Gew.% | $H_2O$ Gew.% |
| 200 | 91 | 1 | 8 |
| 250 | 90 | 8 | 2 |
| 300 | 70 | 29,5 | 0,5 |

Es ergibt sich demnach, daß durch entsprechende Temperaturwahl die Granulatzusammensetzung beeinflußt und je nach Anforderung für verschiedene Anwendungszwecke optimiert werden kann.

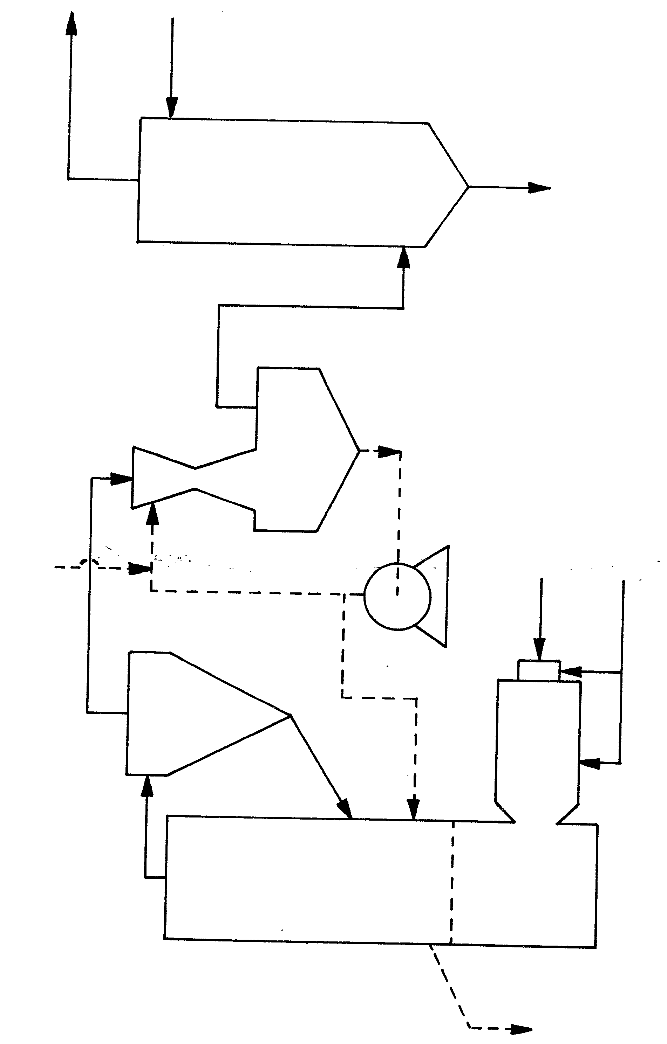

**Ansprüche**

1. Verfahren zur Herstellung von wasserfreiem Zirkoniumtetrafluorid durch Trocknen von in wässriger Flußsäure gelöstem Zirkoniumfluorid und anschließendes Kalzinieren des kristallwasserhaltigen Zirkoniumfluorids, dadurch gekennzeichnet, daß die Lösung kontinuierlich in einen Wirbelschicht-

3

ofen mit einem Bett aus granuliertem Zirkoniumfluorid eingesprüht und verdampft wird und daß das anfallende kristallwasserhaltige Zirkoniumfluorid ebenfalls in einen Wirbelschichtofen mit einem Bett aus granuliertem Zirkoniumfluorid bei 220 bis 300 °C kalziniert und als Granulat kontinuierlich aus dem Wirbelschichtofen abgezogen wird.

2. Verfahren nach Anspruch 1, dadurch gekennzeichnet, daß das Verdampfen der Lösung und das Kalzinieren des anfallenden, kristallwasserhaltigen Zirkoniumfluorids einstufig in demselben Wirbelschichtofen durchgeführt wird.

3. Verfahren nach Anspruch 2, dadurch gekennzeichnet, daß es bei einer Temperatur von 220-300 °C durchgeführt wird.

4. Verfahren nach Anspruch 3, dadurch gekennzeichnet, daß es bei 240-280 °C durchgeführt wird.

5. Verfahren nach einem der Ansprüche 1 bis 4, dadurch gekennzeichnet, daß im Wirbelschichtofen eine Heißgasgeschwindigkeit von 1 bis 4 m/s, bezogen auf den leeren Ofenquerschnitt und eine Wirbelbetthöhe im nicht wirbelnden Zustand von 0,2 bis 0,8 m eingestellt wird.

6. Verfahren nach Anspruch 5, dadurch gekennzeichnet, daß die Heißgasgeschwindigkeit 2 bis 3 m/s und die Betthöhe 0,4 bis 0,6 m beträgt.

7. Verfahren nach einem der Ansprüche 1 bis 6, dadurch gekennzeichnet, daß eine Lösung mit mehr als 200 g Zr/l und mehr als 50 g HF/l eingesprüht wird.

8. Verfahren nach einem der Ansprüche 1 bis 6, dadurch gekennzeichnet, daß die eingesprühte Lösung mehr als 300 g Zr/l und mehr als 150 g HF/l enthält.

9. Verfahren nach Anspruch 7 oder 8, dadurch gekennzeichnet, daß die in den Wirbelschichtofen einzusprühende Lösung durch Auflösen von metallischen Zirkonium-Abfällen in wässriger Flußsäure entsprechend hoher Konzentration und Abtrennen der nicht gelösten Bestandteile gewonnen wird.

10. Verfahren nach Anspruch 1 bis 9, dadurch gekennzeichnet, daß der im Abgas enthaltene Zirkoniumfluoridstaub in einem Zyklon abgetrennt und rezirkuliert wird.

11. Verfahren nach einem der Ansprüche 1 bis 10, dadurch gekennzeichnet, daß der im Abgas enthaltene Zirkoniumfluoridstaub in einem Naßwäscher mittels zirkoniumfluoridhaltiger, wässriger Flußsäure ausgewaschen und rezirkuliert wird.

12. Verfahren nach Anspruch 11, dadurch gekennzeichnet, daß die zirkoniumfluoridhaltige, wässrige Flußsäurelösung im Naßwäscher vorgewärmt und vorverdampft wird und erst danach in den Wirbelschichtofen eingesprüht wird.

13. Verfahren nach einem der Ansprüche 1 bis 12, dadurch gekennzeichnet, daß eine zweistufige Entstaubung des Abgases mittels Zyklon und Naßwäscher vorgesehen ist.

14. Verfahren nach einem der Ansprüche 1 bis 13, dadurch gekennzeichnet, daß die im Abgas enthaltene Flußsäure in einem Waschturm mittels Wasser ausgewaschen und rezirkuliert wird.

## Claims

1. A process of producing anhydrous zirconium tetrafluoride in which zirconium fluoride dissolved in aqueous hydrofluoric acid is dried and the zirconium fluoride which contains water of crystallization is subsequently calcined, characterized in that the solution is continuously sprayed into a fluidized bed furnace containing a bed of granulated zirconium fluoride and is evaporated and that the resulting zirconium fluoride which contains water of crystallization is also calcined at 220 to 300 °C in a fluidized bed furnace containing a bed of granulated zirconium fluoride and as a granulate is continuously withdrawn from the fluidized bed furnace.

2. A process according to claim 1, characterized in that the evaporation of the solution and the calcining of the resulting zirconium fluoride, which contains water of crystallization, are carried out in one stage in the same fluidized bed furnace.

3. A process according to claim 2, characterized in that it is carried out at a temperature of 220 to 300 °C.

4. A process according to claim 3, characterized in that it is carried out at 240 to 280 °C.

5. A process according to any of claims 1 to 4, characterized in that a hot gas velocity of 1 to 4 m/s, based on an empty cross-section of the furnace, and a fluidized bed height corresponding to a non-fluidized bed height of 0.2 to 0.8 m are maintained in the fluidized bed furnace.

6. A process according to claim 5, characterized in that a hot gas velocity of 2 to 3 m/s and a non-fluidized bed height of 0.4 to 0.6 m are maintained.

7. A process according to any of claims 1 to 6, characterized in that a solution containing more than 200 g zirconium per liter and more than 50 g HF per liter is sprayed into the furnace.

8. A process according to any of claims 1 to 6, characterized in that the solution sprayed into the furnace contains more than 300 g Zr per liter and more than 150 g HF per liter.

9. A process according to claim 7 or 8, characterized in that the solution to be sprayed into the fluidized bed furnace is formed in that metallic zirconium waste is dissolved in an aqueous solution of hydrochloric acid having a suitable concentration and the undissolved components are removed.

10. A process according to claims 1 to 9, characterized in that the zirconium fluoride dust contained in the exhaust gas is collected in a cyclone and recycled.

11. A process according to any of claims 1 to 10, characterized in that the zirconium fluoride dust contained in the exhaust gas is removed in a wet scrubber fed with an aqueous solution of hydrofluoric acid and zirconium fluoride and is recycled.

12. A process according to claim 11, characterized in that the aqueous solution of hydrofluoric acid and zirconium fluoride is preheated and subjected to preliminary evaporation in the wet scrubber and is only subsequently sprayed into the fluidized bed furnace.

13. A process according to any claims 1 to 12, characterized in that dust is collected from the exhaust gas in two stages comprising a cyclone and a wet scrubber.

14. A process according to any of claims 1 to 13, characterized in that the hydrofluoric acid contained in the exhaust gas is scrubbed with water in a scrubbing tower to remove hydrofluoric acid and the latter is recycled.

**Revendications**

1. Procédé de préparation de tétrafluorure de zirconium anhydre par séchage de fluorure de zirconium dissous dans de l'acide fluorhydrique aqueux, et ensuite par calcination du fluorure de zirconium contenant de l'eau de cristallisation, caractérisé en ce qu'il consiste à pulvériser et à évaporer la solution en continu dans un four à lit fluidisé ayant un lit en grains de fluorure de zirconium, et à calciner entre 220 et 300 °C le fluorure de zirconium produit contenant de l'eau de cristallisation également dans un four à lit fluidisé ayant un lit en grains de fluorure de zirconium, et à soutirer en continu du four à lit fluidisé le fluorure de zirconium granulé.

2. Procédé suivant la revendication 1, caractérisé en ce qu'il consiste à effectuer l'évaporation de la solution et la calcination du fluorure de zirconium produit contenant de l'eau de cristallisation en un seul stade dans le même four à lit fluidisé.

3. Procédé suivant la revendication 2, caractérisé en ce qu'il est effectué à une température de 220 à 300 °C.

4. Procédé suivant la revendication 3, caractérisé en ce qu'il est effectué entre 240 et 280 °C.

5. Procédé suivant l'une des revendications 1 à 4, caractérisé en ce qu'il consiste à établir dans le four à lit fluidisé une vitesse du gaz chaud entre 1 et 4 m/s rapportée à la section droite du four dégarni et une hauteur du lit fluidisé à l'état non tourbillonnant de 0,2 à 0,8 m.

6. Procédé suivant la revendication 5, caractérisé en ce que la vitesse du gaz chaud est comprise entre 2 et 3 m/s et la hauteur du lit entre 0,4 et 0,6 m.

7. Procédé suivant l'une des revendications 1 à 6, caractérisé en ce qu'il consiste à pulvériser une solution ayant plus de 200 g de Zr/l et plus de 50 g de HF/l.

8. Procédé suivant l'une des revendications 1 à 6, caractérisé en ce que la solution pulvérisée contient plus de 300 g de Zr/l et plus de 150 g de HF/l.

9. Procédé suivant la revendication 7 ou 8, caractérisé en ce qu'il consiste à récupérer la solution pulvérisée dans le four à lit fluidisé par dissolution de déchets de zirconium métalliques dans de l'acide fluorhydrique aqueux ayant une concentration élevée adéquate et par séparation des constituants non dissous.

10. Procédé suivant les revendications 1 à 9, caractérisé en ce qu'il consiste à séparer la poussière de fluorure de zirconium contenue dans le gaz résiduaire dans un cyclone et à la remettre en circulation.

11. Procédé suivant l'une des revendications 1 à 10, caractérisé en ce qu'il consiste à enlever la poussière de fluorure de zirconium contenue dans le gaz résiduaire par lavage dans un laveur humide, au moyen d'acide fluorhydrique aqueux contenant du fluorure de zirconium et à la remettre en circulation.

12. Procédé suivant la revendication 11, caractérisé en ce qu'il consiste à chauffer au préalable et à évaporer au préalable dans le laveur humide la solution d'acide fluorhydrique aqueux contenant du fluorure de zirconium, et à ne la pulvériser qu'ensuite dans le four à lit fluidisé.

13. Procédé suivant l'une des revendications 1 à 12, caractérisé en ce qu'il est prévu un dépoussiérage en deux stades du gaz résiduaire au moyen d'un cyclone et d'un laveur par voie humide.

14. Procédé suivant l'une des revendications 1 à 13, caractérisé en ce qu'il consiste à enlever l'acide fluorhydrique contenu dans le gaz résiduaire par lavage dans une tour de lavage, au moyen d'eau, et à le remettre en circulation.